(19) Europäisches Patentamt
European Patent Office
Office européen des brevets

(11) **EP 2 390 994 A1**

(12) **EUROPEAN PATENT APPLICATION**

(43) Date of publication:
**30.11.2011 Bulletin 2011/48**

(51) Int Cl.:
*H02K 49/10* (2006.01)      *H02K 51/00* (2006.01)

(21) Application number: **10163926.8**

(22) Date of filing: **26.05.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **Delphi Technologies, Inc.**
**Troy MI 48007 (US)**

(72) Inventor: **Farah, Philippe Siad**
**54400, Longwy (FR)**

(74) Representative: **Office Freylinger**
**P.O. Box 48**
**8001 Strassen (LU)**

(54) **Magnetic gear and power split transmission using such**

(57)     A variable magnetic gear comprises a first movable member (12, 112, 212, 312, 412) having a number of magnetic poles; a control stator (16, 116, 216, 316, 416) separated from the first movable member (12, 112, 212, 312, 412) by an air gap and having one or more phases of driving coils (20) configured to form predetermined pole pairs; and a second movable member (22, 122, 222, 322, 422) located in the air gap and having a number of pole pieces. The number of pole pairs in the control stator is equal to the difference between the number of pole pieces in the second movable member and the number of pole pairs in the first movable member.

    A transmission system is also presented using this variable magnetic gear as power spl it.

Fig. 1

EP 2 390 994 A1

**Description**

FIELD OF THE INVENTION

The present invention generally relates to magnetic gears and in particular to a magnetic gear for use as power-split in a transmission system, e.g. an automotive vehicle power train.

BACKGROUND OF THE INVENTION

Magnetic gears are known in which input and output rotors are provided with respective sets of magnetic pole pairs and a set of ferromagnetic pole pieces is arranged in between the input and output rotors to modulate the magnetic field and allow the input to drive the output rotor with a predetermined gear ratio.

Magnetic gears can find a variety of applications. Recently, magnetic gears have been proposed to replace the planetary gear set conventionally used in hybrid vehicles.

WO 2009/103993, for example, discloses a transmission system comprising a variable magnetic gear comprising an inner rotor having a first set of magnetic poles, an outer rotor having a second set of magnetic poles and a third, field rotor having a set of pole pieces arranged to modulate the magnetic field acting between the magnetic poles. Control means, in the form of an electrical machine, are provided to control rotation of one of the rotors so as to vary the gear ratio between the other two rotors.

In one embodiment shown in Fig.12 of WO 2009/103993, an internal combustion engine is connected to the input rotor and the two other rotors are coupled to a respective Motor/Generator. A first motor/generator (MG1) is integrated within the magnetic gear and is arranged to drive the outer rotor. The field rotor with pole pieces is connected to an output shaft via an additional reduction gear unit. The second motor/generator (MG2) is arranged to store energy from the combustion engine to a battery pack when the total output power of the engine is not used, and to take power from the battery pack to provide additional torque to the output shaft when the engine is not producing sufficient power. This embodiment is actually an electromagnetic variant of the power-split device used in the Toyota® Prius® that employs a planetary gear.

OBJECT OF THE INVENTION

The object of the present invention is to provide an improved type of magnetic gear particularly suitable for use as power-split device in a torque transmission or power generation system.

SUMMARY OF THE INVENTION

The present invention proposes a variable magnetic gear as claimed in claim 1. It comprises:

a first movable member having a first set of magnetic poles;

a control stator separated from the first movable member by an air gap and having one or more phases of driving coils configured to form predetermined pole pairs; and

a second movable member located in said air gap and having a set of pole pieces.

The present invention provides a magnetic gear member of simple construction that can be used as simple variable gear or power-split device in a transmission system. Further, the present magnetic gear can be easily controlled and is comparable in that respect to a conventional electric machine. For instance, the stator is advantageously controlled to generate a magnetic field that rotates at the same speed as the magnetic field resulting from the two rotors. As it will be discussed below, the gear ratio between the two movable members can be adjusted by varying the supply frequency of the stator driving coils.

Referring back to WO 2009/103993, the present inventor has found that an efficient magnetic gear can be developed without the need for three rotors. Hence, the present magnetic gear preferably only comprises two movable members, one carrying the magnetic poles and the other the pole pieces. In other words, the air gap between the first movable member with magnetic poles and the control stator only comprises the second movable member with pole pieces. As a result, there is one less permanent magnet rotor, i.e. one less rotating part limiting speed and susceptible of failure.

For ease of control and stability, the control rotor shall preferably comprise three or more phases of driving coils.

Additionally, for an improved transfer of torque in the magnetic gear, the number of pole pairs in the control stator is advantageously equal to the difference between the number of pole pieces (Ns) in the second movable member and the number of pairs of magnetic poles (pl) in the first movable member.

As it is clear to those skilled in the art, the present magnetic gear can be implemented in a radial configuration or in an axial (linear) configuration. Also, the magnetic poles in the first movable member may be permanent magnets or electro-magnets—for synchronous operation—or conductive wires or bars (squirrel cage)—for asynchronous operation.

In a preferred embodiment, the first movable member comprises an array of permanent magnets (arranged to form the desired number of magnetic poles) that can be embedded in the movable member or positioned on its surface facing the control stator. This provides a brushless magnetic gear.

In one embodiment, an electric machine is associated with the magnetic gear in such a way as to be able to control the rotation of the first movable member. Such electric machine may comprise a wound stator that cooperates with permanent magnets on the first movable member.

In practice, a control module is provided to supply the stator driving coils at a frequency fs, the latter influcing the gear ratio. In this connection, the control of the stator is advantageously based on an electric angle determined as: $\theta_{electric} = Ns.\theta_{R2} - pl.\theta_{R1}$, where $\theta_{R1}$ and $\theta_{R2}$ are the angular positions of the first and second movable members, respectively, Ns is the number of pole pieces and $pl$ the number of pole pairs in the first movable member.

According to another aspect of the present invention, there is proposed a transmission system according to claim 10, comprising a drive member, a driven member and a power split device comprising a magnetic gear according to the first aspect of the invention described above. The drive and driven member are coupled via the magnetic gear.

Preferred embodiments of this system are recited in the appended dependent claims 11 to 15.

BRIEF DESCRIPTION OF THE DRAWINGS

The present invention will now be described, by way of example, with reference to the accompanying drawings, in which:

FIG. 1: is a principle diagram of a preferred embodiment of the present magnetic gear;

FIG. 2: is a diagram illustrating the control of the magnetic gear of Fig.1;

FIG. 3: is a diagram of a transmission system featuring the magnetic gear of Fig.1;

FIG. 4: is a diagram of a transmission system featuring the present magnetic gear in a different radial configuration;

FIG. 5: is a diagram of a transmission system featuring the present magnetic gear in axial configuration;

FIG. 6: is a principle diagram illustrating a feature of the stator control module;

FIG. 7: is a graph showing the ouput torque vs. output speed;

FIG. 8: is a diagram showing a transmission system with another embodiment of the magnetic gear;

FIG. 9: is a diagram showing the transmission system of Fig.8 with the magnetic gear in axial configuration.

DETAILED DESCRIPTION OF A PREFERRED EMBODIMENT

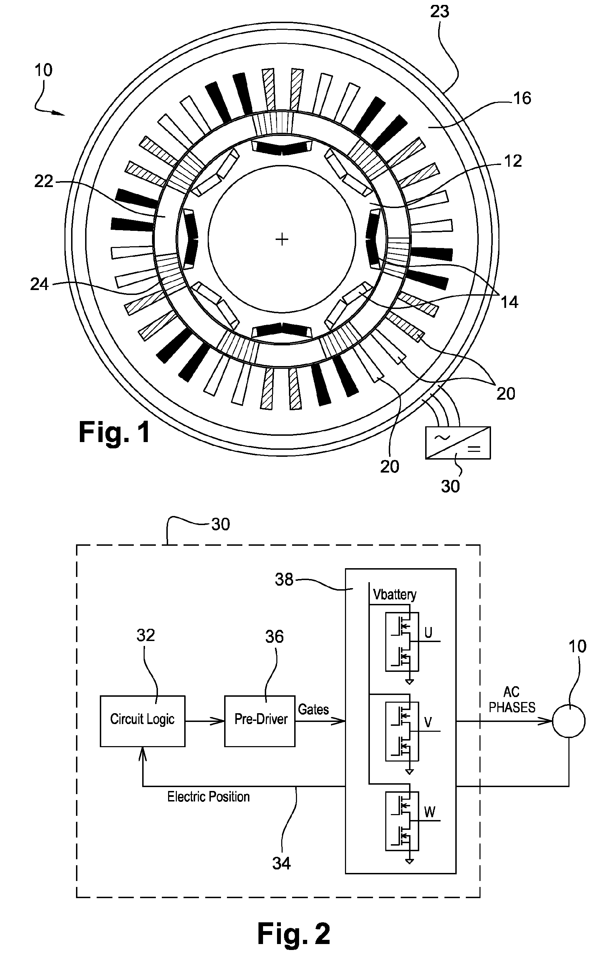

Fig.1 shows a principle diagram of a preferred embodiment of the present magnetic gear 10. It generally comprises a first movable member 12 having a first set of magnetic poles 14, a control stator 16 separated from the first movable member 12 by an air gap and having one or more phases of driving coils 20 configured to form a predetermined number of pole pairs and a second movable member 22 located in said air gap and having a set of pole pieces 24.

In the embodiment of Fig.1, the magnetic gear 10 is implemented in a radial configuration and the first and second movable members 12 and 22 are two rotors concentrically arranged with the annular stator 16. The rotors are mounted to be independently rotatable relative to one another. The stator is fixed.

The first rotor 12 carries a set of 8 permanent magnets 14, forming 8 poles of 4 pole pairs (pl=4). The permanent magnets 14 are arranged with their north and south poles at their radial inner and outer ends and orientated with alternating polarity. While the permanent magnets 14 are shown as embedded in the cylindrical rotor 12 itself, they may alternatively be arranged as an array on the outer side of the first rotor 12.

As it is used herein, the term "pole" designates a region of a member of given polarity. The term "pole pair" then means that there is one North pole and one South pole. As it will be understood by those skilled in the art, one magnetic pole can consist of one magnetic element or a group of neighbouring magnetic elements of same polarity.

The intermediate, second rotor 22 supports a number of Ns pole pieces 24 (here Ns=7). These pole pieces 24 take the form of segments of magnetically permeable material, typically ferromagnetic material, that are embedded in the rotor 22, which is a cylindrical non-magnetic support.

In this variant, the stator 16 advantageously comprises three phases of drive coils 20 on ferromagnetic cores that are arranged and controlled to form, in use, a predetermined number of pole pairs. The use of three phases is favorable in terms of control and stability of the magnetic gear, as it will be understood by those skilled in the art. In this variant also, for an optimized torque transfer, the number of pole pairs in the stator 16 is equal to *Ns-pl*, i.e. to the difference between the number of pole pieces in the second rotor and the number of pole pairs in the first rotor 12. Here, the stator 16 thus comprises 3 pole pairs.

The operation of such a magnetic gear 10 is relatively similar to a conventional electric machine. The stator 16 sees a rotating magnetic field resulting from both rotors 12 and 22, and the drive coils 20 are controlled synchronously. The stator 16 frequency (fs) is hence supplied by a control module 30 in synchronism with the rotating magnetic field from the rotors 12 and 22. Varying the stator supply frequency *fs* allows adjusting the gear ratio between the two rotors 12 and 22.

The applicable angular speed relations for the embodiment of Fig.1 is described by the following equation:

$$pl \cdot \Omega_{R1} = Ns \cdot \Omega_{R2} - \frac{fs}{2\pi} \quad \text{(eq. 1)}$$

where $\Omega_{R1}$ is the angular speed of the first rotor 12 with pl pole pairs, $\Omega_{R2}$ the angular speed of the second rotor 22 with Ns pole pieces and *fs* the supply frequency of the stator 16. As can be seen, the speeds, and thus the gear ratio, are influenced by the stator 16 supply frequency *fs*.

As those skilled in the art will understand, the control of such magnetic gear 10 requires, as for conventional electric machines, the knowledge of the position of the rotating parts. Accordingly, the magnetic gear 10 preferably comprises two sensors, e.g. hall sensors (not shown) that provide respective rotor position signals to the control module 30 (which includes a control logic as well as an DC/AC converter required to drive the three phases of the stator). The sensors may e.g. be fixed to the housing 23 of the magnetic gear 10.

Fig.2 shows a principle diagram of the controller 30 associated with the magnetic gear 10. The controller 30 is connected to a battery that may provide the current to supply the stator coils 20.

For reference, it is recalled that in a conventional electric machine (e.g. an electric motor) comprising a stator and a single rotor with a set of p permanent magnets, the control of such machine requires determining the electric angle, which depends on the rotor position and is expressed:

$$\theta_{electric} = p \cdot \theta_{mechanic} \quad \text{(eq.2a)}$$

where $\theta_{electric}$ is the electric angle and $\theta_{mechanic}$ the measured angular position of the rotor.

Turning back to Fig.2, the control principle is similar, except that a logic circuit 32 receives two position signals 34 representative of the respective angular positions of the two rotors 12 and 22 in order to determine the electric angle $\theta_{electric}$. This electric angle is then used in the controller 30 like in a conventional electric machine to synchronously drive the three phase coils 20 through a coil drive circuitry featuring a pre-driver 36, gates and a power bridge 38.

Here, the electric angle $\theta_{electric}$ is given by the formula:

$$\theta_{electric} = Ns \cdot \theta_{R2} - pl \cdot \theta_{R1} \quad \text{(eq. 2b)}$$

with $\theta_{R1}$ and $\theta_{R2}$ being the angle of the first 12 and second 22 rotors, respectively.

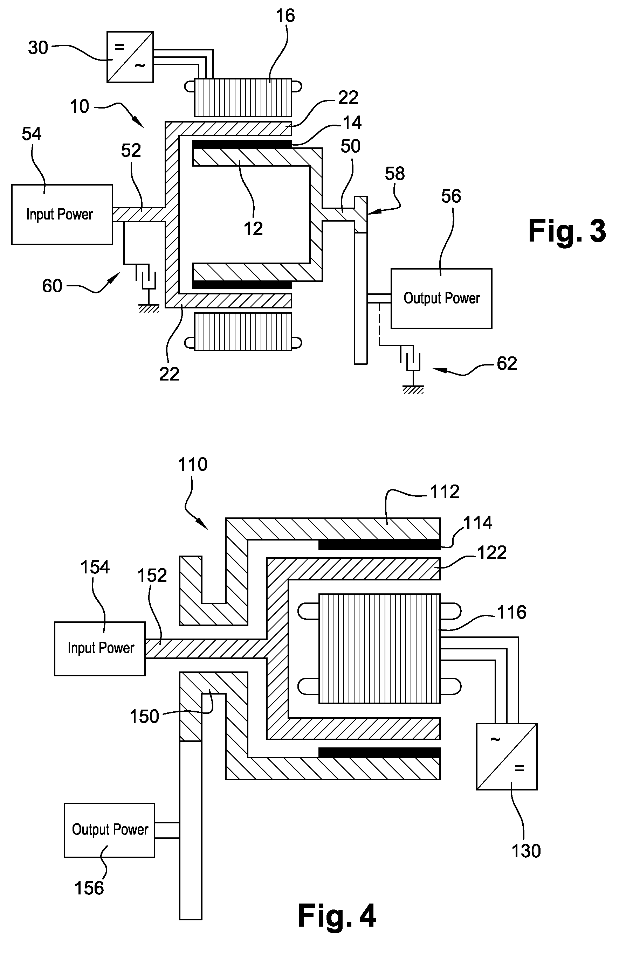

Turning now to Fig.3, there is shown a transmission system featuring the magnetic gear of Fig.1. The first rotor 12 with its permanent magnets 14 is connected to an output shaft 50 or driven member and the second rotor 22 with its pole pieces is connected to an input shaft 52 or drive member. The input shaft 52 may be rotated by a prime mover 54, such as an internal combustion engine, and the output shaft 50 may be coupled to a load, e.g. a wheel axle 56 via a reduction gear 58.

It is to be appreciated that the magnetic gear 10 acts in the transmission system of Fig.3 as a power-split device. In an analogy to a conventional 3-shaft planetary gear conventional used for this purpose, the present magnetic gear comprises the first rotor 12 that acts as the ring carrier and the second rotor 22 acting as planet carrier. Acting as power-split, the magnetic gear 10 allows to control the transfer of energy/power between the input shaft, output shaft, and a power supply /battery (via the stator control module 30).

In normal operation, the magnetic gear 10 allows, through its control, to set the speed of the first rotor 12 relative to the second rotor 22. In one operating mode, the output shaft 50 can be rotated via the engine 54 only, at controllable speed by appropriate operation of the magnetic gear 10. Additionally, the rotation of the output shaft 50 may result from the thermal and electric power inputted into the magnetic gear 10. This is of interest if the mechanical power from the engine 54 is insufficient.

Another operating mode may consist in driving the output shaft 50 by electric power only. In such case, a clutch 60 is preferably provided to be able to selectively block the input shaft 52, with the engine 54 turned off. The magnetic gear 10 thus behaves like a normal electric motor and the stator 16 drives the first rotor 12.

A further clutch 62 may be provided to selectively block the output shaft 50 and thus start-up the engine 54 by operating the magnetic gear 10 through appropriate control of the stator 16. It may be noted that the power-split device 10 itself can start the engine, without starter or additional electric machine.

As compared to the transmission system disclosed in WO 2009/103993 previously mentioned, it may be noted that the present magnetic gear only comprises two rotary parts and allows the same power-split capabilities. Further, it is capable to operate in full electric mode with only one stator, while a drawback of the system of WO 2009/103993 and of the mechanical planetary power split used in the Toyota® Prius® is that in full electric mode, running on MG2, the control MG1 is carried along and limits the running speed.

Fig.4 shows another configuration of the present magnetic gear in a transmission system. Like elements are indicated by same reference signs, increased by 100 with respect to Fig.3. As can be seen, the stator 116 is arranged at the center of the magnetic gear 110. The first rotor 112 with permanent magnets 114 is now the outer rotor and the second rotor 122 with pole pieces still is the intermediate rotor, arranged in the air gap between rotor 112 and stator 116.

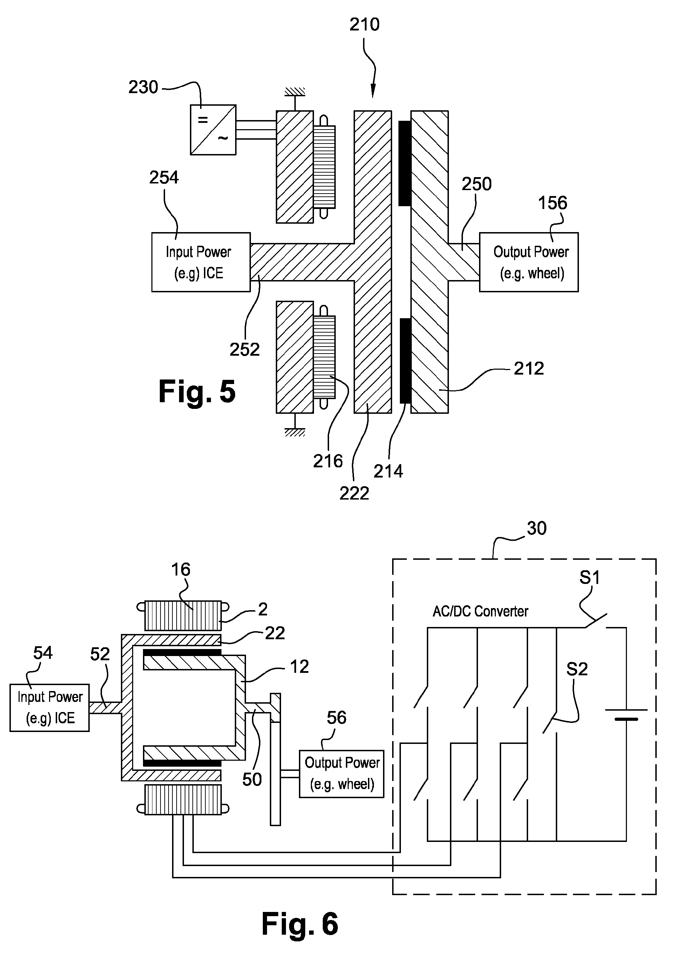

A further embodiment of transmission system is shown in Fig.5 where the magnetic gear 210 is in axial (or linear) configuration. Like elements are indicated by same reference signs, increased by 200 with respect to Fig.3. Instead of cylindrical rotors, the first and second movable members 212 and 222 take the form of rings (or more generally translators) provided with circularly distributed magnetic poles 214 and pole pieces (not shown), respectively. The stator 216 is also arranged on a ring/annular member. The input shaft 252, coupled to the thermal engine 254, is connected to the second member 222 and the output shaft 250 is connected to the first movable member 212.

The above embodiments related to preferred, optimized variants for synchronous operation using permanent magnets, which provides a brushless power-split device. Alternatively, the permanent magnets may be replaced by electromagnets, although it would require slip rings or the like.

Besides, the present magnetic gear may be designed as asynchronous device using wires or bars instead of the permanent magnets in the first rotor. As it is known in the art, this introduces a so-called "slip" factor that has to be taken into account.

The speed relationships can then be written in a more general way than in eq.1:

$$pl \cdot \Omega_{R1} = Slip \cdot \left( Ns \cdot \Omega_{R2} - \left( Ns - pl \right) \cdot \Omega_{stator} \right) \qquad \text{(eq. 3)}$$

$$\left( Ns - pl \right) \cdot \Omega_{stator} = 2\pi \cdot fs \quad \text{(eq. 4)}$$

where slip = 1 for the synchronous solution (permanent magnets)
and slip $\neq$ 1 for conductive asynchronous solution (conductive wires / bars).

Turning now to Fig.6, there is shown a principle diagram illustrating an optional feature of the controller 30 that allows bypassing the supply battery used to power the magnetic gear 10 under normal operation. Two switches are indicated S1 and S2, and the control allows only one of the switches S1 and S2 to be closed at a time. In normal operation, S1 closes the circuit and allows to supply drive coils of the magnetic gear with power, and conversely induced current may flow back to the battery.

Alternatively, closing S2 with S1 open avoids the flow of current back and forth to the battery, but an appropriate control of the coils 20 by controller 30 would still allow influencing the rotation of the rotors by a timely short-circuiting of the drive coils.

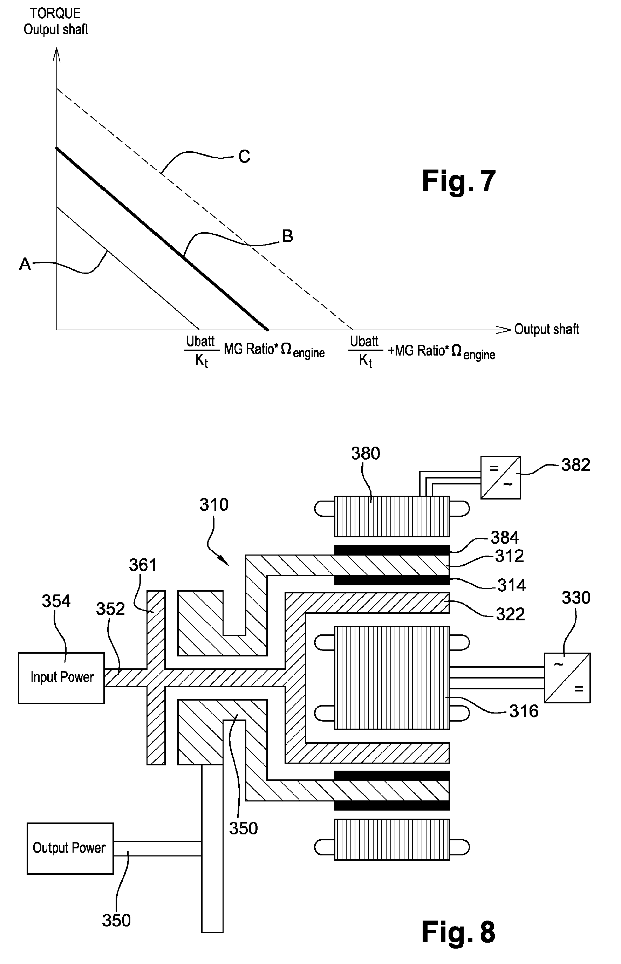

The torque vs. speed relationship of the output shaft depending on the position of the switches S1 and S2 is illustrated in Fig.7. The first line A corresponds to the case where the thermal engine is off with switch S1 closed (ON) and switch S2 open (OFF). The torque transferred to the output shaft is entirely electrically produced and the max. speed of the output shaft corresponds to Ubatt/Kt, where Ubatt is the battery voltage and Kt indicates the machine torque constant. In such case, the magnetic gear operates like a conventional electric motor.

Second case is illustrated by line B, where the engine is running but this time S1 is open and S2 closed. The battery is hence bypassed and the transmission operates on the thermal engine. In such case, the magnetic gear 10 acts as a simple variable gear, and the max. gear ratio cannot exceed the magnetic gear ratio: $MGRatio \cdot \Omega_{engine}$.

Third case, illustrated by line C, corresponds to the combined use of thermal and electric power. The maximum output speed is thus the sum of the two previous terms: $\dfrac{Ubatt}{Kt} + MGRatio \cdot \Omega_{engine}$.

A further embodiment of the present transmission system is illustrated in Fig.8, where an additional electric machine is mechanically integrated into the magnetic gear. In the Figure like elements are indicated by same reference signs, however increased by 200 with respect to Fig.4.

Starting from a configuration of the magnetic gear similar to Fig.4 with the control stator 316 inside, surrounded by the second rotor 322 with pole pieces and the first rotor 312 with permanent magnets, an annular, wound stator 380, operating as an electric machine, has been concentrically arranged around the outermost, first rotor 312. The additional stator 380 preferably has three phases of drive coils and is driven by a controller 382. The additional stator 380 generates a magnetic field adapted to cause rotation of the outer, first rotor 312.

This stator 380 is added to be able to drive the output shaft 350 in full electric mode, without requiring a mechanical clutch/coupling on the input shaft 352. In the embodiment of Fig.3 for example, to run on electric power only, clutch 60 is preferably activated to block the input shaft and therefore block the linked second rotor 22.

Here, in the embodiment of Fig.8, to run in full electric mode it suffices not to supply the control stator 316 and to drive the additional stator 380 to rotate the first rotor 312 that is preferably provided with additional permanent magnets 384 on its outer periphery. The magnetic gear 310 then operates as a conventional rotary machine, the control of is well known.

It may be noted that while, in this embodiment, the outer rotor 312 is shown with an inner array of permanents magnets 314 and an outer array of permanent magnets 384 forming a predetermined number of magnetic pole pairs, it may alternatively consist of one set of magnets embedded in the cylindrical rotor structure. The use of two sets of magnets however allows for different pole numbers.

Furthermore, it is not necessary to install the second stator 380 in a radial configuration. For example, the second array of permanent magnets 384 could be arranged on a flange extending radially and outwardly from the right edge of the first rotor 312 and the stator 380 would be arranged laterally so that its drive coils face the permanent magnets. Indeed, what matter is that an auxiliary electric machine is associated with the first movable member 312 to be able to rotate the latter.

Still with regard to Fig.8, reference sign 361 indicates an optional safety clutch that allows to selectively directly couple the input shaft 352 to the output shaft 350 for a full mechanical drive in case the magnetic gear 310 is deficient.

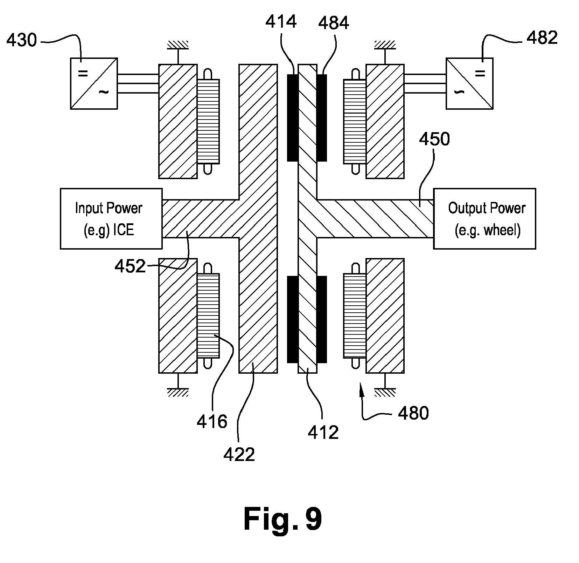

The transmission system of Fig.8 is shown in axial configuration in Fig.9, where like elements are indicated by same reference signs, increased by 100. Here again, the additional stator 480 is arranged so as to be able to produce a magnetic field capable of rotating the first rotor 412 with permanent magnets.

**Claims**

1. A variable magnetic gear comprising:

   a first movable member (12, 112, 212, 312, 412) having a number of magnetic poles;
   a control stator (16, 116, 216, 316, 416) separated from the first movable member (12, 112, 212, 312, 412) by an air gap and having one or more phases of driving coils (20) configured to form predetermined pole pairs; and
   a second movable member (22, 122, 222, 322, 422) located in said air gap and having a number of pole pieces;
   wherein the number of pole pairs in the control stator is equal to the difference between the number of pole pieces in the second movable member and the number of pole pairs in the first movable member.

2. The variable magnetic gear according to claim 1, wherein said air gap between said first movable member (12, 112, 212, 312, 412) and said control stator (16, 116, 216, 316, 416) comprises said second movable member (22, 122, 222, 322, 422) only.

3. The variable magnetic gear according to claim 1 or 2, comprising a control module (30, 130, 230, 330, 430) adapted to supply the control stator driving coils (20) at a frequency fs.

4. The variable magnetic gear according to claim 3, wherein said control module (30, 130, 230, 330, 430) supplies the control stator driving coils based on an electric angle determined as: $\theta_{electric} = Ns \cdot \theta_{R2} - pl \cdot \theta_{R1}$, where $\theta_{R1}$ and $\theta_{R2}$ are the angular positions of the first and second movable members, respectively, Ns is the number of pole pieces and $pl$ the number of pole pairs in the first movable member.

5. The variable magnetic gear according to any one of the preceding claims, wherein the first movable member, second movable member and the control stator member are in radial or axial configuration.

6. The variable magnetic gear according to any one of the preceding claims, wherein the magnetic poles in the first member are selected from the group comprising: permanent magnets, electro-magnets with conductive wires and/or bars.

7. The variable magnetic gear according to any one of claims 4 to 6, wherein said control module is configured for synchronous, respectively asynchronous, operation of the control stator.

8. The variable magnetic gear according to any one of the preceding claims, comprising an additional, wound stator (380, 480) acting as electric machine and associated with said first movable member (12, 112, 212, 312, 412).

9. The variable magnetic gear according to claim 7, wherein said first movable member (12, 112, 212, 312, 412) comprises an additional set of magnetic poles (384, 484) cooperating with said additional, wound stator (380, 480).

10. A transmission system with a drive member (52, 152, 252, 352, 452), a driven member (50, 150, 250, 350, 450) and a power-split device comprising a variable magnetic gear according to anyone of claims 1 to 7, wherein the drive member is connected to one of the first or second movable member (12, 112, 212, 312, 412; 22, 122, 222, 322, 422) and the driven member is connected to the other of said first and second movable member.

11. The transmission system according to claim 10, wherein the drive member and/or driven member is/are connected to their respective movable member via clutch means.

12. The transmission system according to claim 10 or 11, wherein said magnetic gear comprises an additional, wound stator member (380, 480) acting as electric machine and associated with said first movable member.

13. The transmission system according to claim 12, wherein said first movable member (12, 112, 212, 312, 412) comprises an additional set of magnetic poles (384, 484) cooperating with said additional, wound stator (380, 480).

14. The transmission system according to any one of claims 10 to 13, wherein said control module of said control stator is connected to an electric supply and configured to be operable in at least one of the following modes:

    a first mode in which the control stator is arranged to take power from the supply to control the gear ratio;
    a second mode in which the stator member is arranged to control power transmitted to the supply to control the gear ratio.

15. The transmission system according to any one of claims 10 to 14, comprising safety clutch means configured to selectively connect the drive member directly to the driven member.

23

10

16

22

12

24

14

20

20

30

**Fig. 1**

30

38

Vbattery

U

32

36

10

Circuit Logic → Pre-Driver → Gates

V

AC PHASES

Electric Position

34

W

**Fig. 2**

Fig. 3

Fig. 4

**Fig. 5**

**Fig. 6**

TORQUE
Output shaft

C

B

A

$$\frac{Ubatt}{K_t} - MG\ Ratio^* \Omega_{engine} \qquad \frac{Ubatt}{K_t} + MG\ Ratio^* \Omega_{engine}$$

Output shaft

**Fig. 7**

380

382

310

384
312
314

361

322

354

352

330

Input Power

316

350

350

Output Power

350

**Fig. 8**

**Fig. 9**

## EUROPEAN SEARCH REPORT

Europäisches
Patentamt
European
Patent Office
Office européen
des brevets

Application Number

EP 10 16 3926

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2009/147378 A1 (MAGNOMATICS LTD [GB]; RENS JAN JOZEF [GB]; ATALLAH KAIS [GB]) 10 December 2009 (2009-12-10) * abstract; figures * * page 3, line 7 - page 4, line 19 * * page 5, line 19 - page 7, line 12 * * page 10, line 22 - page 11, line 15 * ----- | 1-15 | INV. H02K49/10 H02K51/00 |
| Y | FR 1 560 584 A (PRECISION MECANIQUE LABINAL) 21 March 1969 (1969-03-21) * page 1, left-hand column * * page 2, right-hand column; figures * ----- | 1-7,10, 11,15 | |
| A,D | WO 2009/103993 A1 (MAGNOMATICS LTD [GB]; RENS JAN JOZEF [GB]; ATALLAH KAIS [GB]) 27 August 2009 (2009-08-27) * abstract; figures * ----- | 1-15 | |
| A | WO 2010/015299 A1 (ROLLS ROYCE PLC [GB]; MONTGOMERY JAMES WILLIAM PHILI [GB]; EDWARDS HUW) 11 February 2010 (2010-02-11) * abstract; figures * ----- | 1-15 | |
| Y | WO 99/39426 A1 (SCHROEDL MANFRED [AT]) 5 August 1999 (1999-08-05) * abstract; figures * ----- | 8,9, 12-14 | TECHNICAL FIELDS SEARCHED (IPC) H02K |
| A | FR 2 868 622 A1 (RENAULT SAS [FR]) 7 October 2005 (2005-10-07) * abstract; figures * ----- | 1-15 | |

The present search report has been drawn up for all claims

| Place of search | Date of completion of the search | Examiner |
|---|---|---|
| The Hague | 24 January 2011 | Ramos, Horacio |

EPO FORM 1503 03.82 (P04C01)

## ANNEX TO THE EUROPEAN SEARCH REPORT
## ON EUROPEAN PATENT APPLICATION NO.

EP 10 16 3926

This annex lists the patent family members relating to the patent documents cited in the above-mentioned European search report.
The members are as contained in the European Patent Office EDP file on
The European Patent Office is in no way liable for these particulars which are merely given for the purpose of information.

24-01-2011

| Patent document cited in search report | | Publication date | Patent family member(s) | | Publication date |
|---|---|---|---|---|---|
| WO 2009147378 | A1 | 10-12-2009 | NONE | | |
| FR 1560584 | A | 21-03-1969 | DE | 1940543 A1 | 08-10-1970 |
| WO 2009103993 | A1 | 27-08-2009 | EP | 2255107 A1 | 01-12-2010 |
| | | | GB | 2457682 A | 26-08-2009 |
| WO 2010015299 | A1 | 11-02-2010 | NONE | | |
| WO 9939426 | A1 | 05-08-1999 | AT | 408045 B | 27-08-2001 |
| | | | AU | 2142599 A | 16-08-1999 |
| | | | CA | 2319415 A1 | 05-08-1999 |
| | | | DE | 59907626 D1 | 11-12-2003 |
| | | | EP | 1051797 A1 | 15-11-2000 |
| | | | US | 6373160 B1 | 16-04-2002 |
| FR 2868622 | A1 | 07-10-2005 | EP | 1735898 A2 | 27-12-2006 |
| | | | WO | 2005096476 A2 | 13-10-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2009103993 A